# EUROPEAN PATENT APPLICATION

(11) **EP 4 752 487 A1**
(43) Date of publication of application: **03.06.2026**
(21) Application number: 24871111.1
(22) Date of filing: 03.09.2024
(51) Int. Cl.: F25D 31/00, F25D 15/00

(54) **FREEZING DEVICE**

(30) Priority: 25.09.2023 ES 202331697 U
(71) Applicant: Paredes Arano, Ladislao, 20750 Zumaia (Guipúzcoa) (ES)
(72) Inventor: Paredes Arano, Ladislao, 20750 Zumaia (Guipúzcoa) (ES)
(74) Representative: Díaz de Bustamante y Terminel, Isidro
(86) International application number: PCT/ES2024/070531
(87) International publication number: WO 2025/068616

(57) **Abstract**

Freezing device comprising a preservation chamber (1) comprising cooling means (2) configured to keep the inside of the preservation chamber (1) at a temperature between -80 °C and 16 °C, characterised in that it comprises a programmable logic controller (3) that is connected to microwave emitting means (4) configured to emit microwave radiation inside the preservation chamber (1).

## Description

### OBJECT OF THE INVENTION

The object of the present invention, as stated in the title of the invention, is a freezing device that allows the proteins of food to remain intact during freezing. This is an innovation that, within current techniques, provides advantages previously unknown.

The present invention is characterised by the special functional and constructive characteristics of the elements that form part of the device, so that all of them contribute to achieving a freezing device.

### TECHNICAL FIELD

Therefore, the present invention falls within the scope of refrigerated food preservation devices.

### BACKGROUND OF THE INVENTION

In food industry, freezing is defined as the intense application of cold capable of stopping the bacteriological and enzymatic processes that destroy food. Nevertheless, during the freezing and frozen storage processes, different changes can occur that may negatively affect the quality of the product.

The freezing process occurs gradually, going through different phases: nucleation and crystallization.

Most common foods freeze between 0 °C and -4 °C. This zone is known as the zone of maximum crystal formation. Nuclearization is the beginning of freezing and involves the presence or formation of small nuclei that are the centres of the crystals that form.

Crystallization consists of the growth of crystals from the nuclei formed. For crystallization to occur more easily, there needs to be some insoluble particle or salt that acts as a crystallization nucleus. The lower the temperature, the more easily the phenomenon occurs, forming a greater number of crystalline aggregates and, consequently, the size of the crystals is smaller. Conversely, at a temperature close to the melting point, nucleation is slow, the crystalline nuclei are few and, therefore, relatively large crystals result.

Quick freezing produces small, more or less rounded crystals, while slow freezing leads to larger, elongated, or needle-shaped crystals. This slow freezing results in the rupture of fibres and cell walls, causing the food to lose some of its properties and proteins.

As the temperature is reduced, a point is reached where the remaining water, together with the solutes that have been concentrating, solidify together at a saturation point called the eutectic point. This point is many times lower than what many commercial freezers are able to reach, which allows small amounts of unfrozen water to remain, enabling some microorganisms to survive, although their growth and reproduction are not possible.

When the product has frozen slowly or when there have been temperature fluctuations during storage, the ice crystals that form grow by extracting water bound to the proteins, so that these become disorganized and are then unable to recover this water during thawing, so that this water, when lost, drags the water-soluble nutrients along with it. This process changes the texture of the food, producing a hardening and even decreasing its solubility and nutritional value.

All these effects are lower the faster the freezing occurs and the lower the storage temperature is.

With reference to the current state of the art, it should be noted that, while various designs of freezing devices are known, it is unknown the existence of any other that presents structural and constitutive technical characteristics equal or similar to those presented by the invention claimed herein.

### EXPLANATION OF THE INVENTION

The object of invention is a freezing device designed to prevent ice crystals from forming in food during freezing. Through microwave waves emitted towards food the formation of ice crystals is prevented by polarizing water molecules and forming microcrystals instead, keeping proteins intact.

Specifically, what the invention proposes, as noted above, is a device comprising a preservation chamber, comprising cooling means that maintain the inside of the preservation chamber at a temperature between -80 °C and 16 °C, which causes the freezing of the food placed inside, comprising a programmable logic controller connected to microwave emitting means configured to emit microwave radiation inside the preservation chamber.

Unless otherwise stated, all technical and scientific terms used in this specification have the meaning that is commonly understood by a person skilled in the art to which this invention belongs. In the practice of the present invention, procedures and materials similar or equivalent to those described in the specification may be used.

### BRIEF DESCRIPTION OF THE DRAWINGS

In order to complement the description being made and to ease a better understanding of the characteristics of the invention, is attached to the present specification, making part of the same, some figures where, with an illustrative non limitative character, the following has been represented:

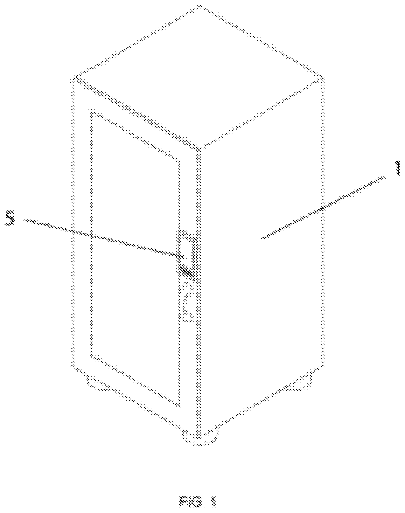

Figure 1 is a perspective representation of the freezing device.

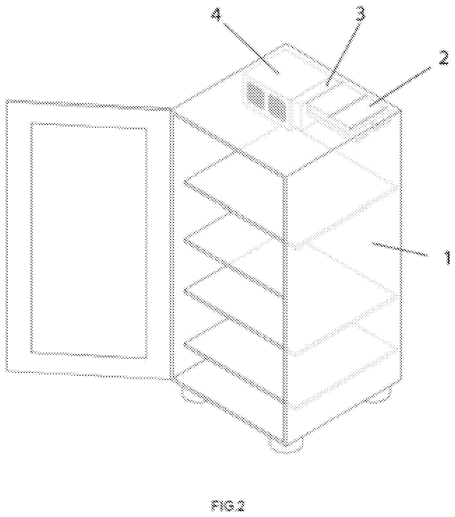

Figure 2 is a perspective representation of the freezing device wherein the inside is shown.

### PREFERRED EMBODIMENT OF THE INVENTION

In view of the figures, a preferred, though not limiting, embodiment of the proposed invention is described below, which consists of a freezing device.

As can be seen in the figures, the freezing device comprises a preservation chamber (1), comprising cooling means (2) configured to keep the inside of the preservation chamber (1) at a temperature between -80 °C and 16 °C.

Complementarily, the freezing device comprises a programmable logic controller (3) that is connected to microwave emitting means (4) configured to emit microwave radiation inside the preservation chamber (1).

Moreover, the programmable logic controller (3) comprises control means (5) configured to control the operation of the programmable logic controller (3).

Having sufficiently described the nature of the present invention, as well as a way of putting it into practice, it is not considered necessary to make more extensive its explanation in order that any person skilled in the art will understand its scope and the advantages derived from it, making known that, within its essentiality, it could be put into practice in other embodiments differing in detail from that indicated by way of example, and which will also obtain the protection that is sought, provided that its fundamental principle is not altered, changed or modified.

## Claims

1. Freezing device comprising a preservation chamber (1) comprising cooling means (2) configured to keep the inside of the preservation chamber (1) at a temperature between -80 °C and 16 °C, **characterised in that** it comprises a programmable logic controller (3) that is connected to microwave emitting means (4) configured to emit microwave radiation inside the preservation chamber (1).

2. Freezing device, according to the preceding claim, **characterised in that** the programmable logic controller (3) comprises control means (5).
